(19) Europäisches Patentamt
European Patent Office
Office européen des brevets

(11) **EP 4 738 843 A1**

(12) **EUROPEAN PATENT APPLICATION**

(43) Date of publication:
**06.05.2026 Bulletin 2026/19**

(21) Application number: **25191432.1**

(22) Date of filing: **24.07.2025**

(51) International Patent Classification (IPC):
*H04N 21/2343* (2011.01)    *H04L 41/0896* (2022.01)
*H04L 65/80* (2022.01)    *H04N 21/2662* (2011.01)
*H04N 21/845* (2011.01)    *H04N 21/258* (2011.01)
*H04N 21/462* (2011.01)

(52) Cooperative Patent Classification (CPC):
**H04N 21/23439; H04L 65/80; H04N 21/25825;**
**H04N 21/2662; H04N 21/4621; H04N 21/8456;**
H04L 41/0896

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **05.11.2024 US 202418938064**

(71) Applicants:
• **Disney Enterprises, Inc.**
**Burbank, CA 91521 (US)**
• **Beijing YoJaJa Software**
**Technology Development Co., Ltd.**
**Beijing 100015 (CN)**

(72) Inventors:
• **Huang, Lemei**
**Beijing (CN)**
• **Dai, Tongyu**
**Beijing (CN)**
• **Zhang, Wenhao**
**Beijing (CN)**
• **Chen, Si**
**Beijing (CN)**
• **Howe, Thomas**
**Chicago (US)**

(74) Representative: **Müller-Boré & Partner**
**Patentanwälte PartG mbB**
**Friedenheimer Brücke 21**
**80639 München (DE)**

(54) **QUALITY AWARE PROFILE FILTERING IN CONTENT DELIVERY**

(57) In some embodiments, a method determines an instance of content to be delivered to a client device. The content includes segments that are associated with a plurality of profiles. A target metric and a bandwidth distribution are determined. The method determines a plurality of top profile decisions for the plurality of segments where a top profile decision lists a top profile that can be selected for respective segments in the plurality of segments. A performance of the target metric is deter-mined for the plurality of top profile decisions based on the bandwidth distribution. The method selects a top profile decision from the top profile decisions based on the performance of the target metric for the top profile decisions. The top profile decision is used to determine a target quality. The target quality is used to select top profiles for requesting segments in the segments during playback of the content.

**FIG. 1**

Processed by Luminess, 75001 PARIS (FR)

**Description**

**BACKGROUND**

In adaptive bitrate streaming, content is encoded in multiple profiles with different bitrates, qualities, or bitrates and qualities. Then, during playback, a media player may adaptively switch between the different profiles according to a criteria, such as available bandwidth. However, not all the profiles may be necessary for all types of devices. For example, on some devices, such as smartphones with limited computing resources or smaller screens, users may not notice a quality improvement of selecting a profile with a very high bitrate. However, providing a very high bitrate may result in a higher risk of rebuffering where not enough content is available to meet the playback rate of the media player, a higher cost for users due to the delivery of cellular data, or a higher cost for a company that is transferring the data.

**BRIEF DESCRIPTION OF THE DRAWINGS**

The included drawings are for illustrative purposes and serve only to provide examples of possible structures and operations for the disclosed inventive systems, apparatus, methods and computer program products. These drawings in no way limit any changes in form and detail that may be made by one skilled in the art without departing from the spirit and scope of the disclosed implementations.

FIG. 1 depicts a simplified system for performing profile filtering according to some embodiments.

FIG. 2 depicts a simplified flowchart of a method for determining the top profile decisions according to some embodiments.

FIG. 3A depicts an example of the video quality intervals according to some embodiments.

FIG. 3B depicts an example of a representation of the reduction according to some embodiments.

FIG. 4 depicts a simplified flowchart of a method for predicting the performance of top profile decisions according to some embodiments.

FIG. 5 depicts a simplified flowchart by method for selecting the target video quality according to some embodiments.

FIG. 6 illustrates one example of a computing device according to some embodiments.

**DETAILED DESCRIPTION**

Described herein are techniques for a content delivery system. In the following description, for purposes of explanation, numerous examples and specific details are set forth to provide a thorough understanding of some embodiments. Some embodiments as defined by the claims may include some or all the features in these examples alone or in combination with other features described below, and may further include modifications and equivalents of the features and concepts described herein.

System Overview

In some embodiments, a system uses a profile filtering process to exclude some profiles that are available to client devices. Content, such as a video, audio, video and audio, or other multimedia content, may be encoded in multiple profiles that correspond to different levels, which may be different levels of bitrates, quality, or bitrate and quality. The profiles may be included in a profile ladder.

The system may receive adaptable parameter settings that meet specified targets, such as quality of service targets. In some embodiments, the system may use targets of a maximum tolerable quality loss or a minimum required data saved ratio, but other targets may be used based on the performance metric that is used. The value of the target may also be varied, such as an absolute value or percentage may be used for either. The maximum tolerable quality loss may be the maximum amount of quality that is lost by removing profiles from the profile ladder. The minimum required data saved ratio may be the minimum data saved ratio based on data saved by removing one of the profiles. These parameters may be adjusted, and based on the values, the process may analyze the profiles for multiple segments to select a target video quality for the content. The target video quality may be sent to a client device. Then, the client device uses the target video quality to perform profile filtering of a profile ladder. The profile filtering may remove profiles from the profile ladder.

Accordingly, an adaptive bitrate algorithm may not be able to select these profiles during playback of the content.

The selection of the target video quality using the parameters may improve the content delivery process. For example, the profiles that are removed may cause the delivery of the content to optimally meet the target quality of service that is desired. The profile filtering process may analyze possible combinations of top profiles for segments to determine an optimal decision of top profiles for segments. That decision is used to select the target video quality. This process may select the target video quality that may result in profiles being removed at the client device that may meet the target quality of service when the content is delivered. This may result in resources being saved or being used more efficiently. For example, data being transferred through the network may be saved due to removing profiles that may not be necessary for a type of device. Also, the delivery may be more efficient by reducing rebuffers that may be experienced due to the profiles that may be likely to cause rebuffers.

System

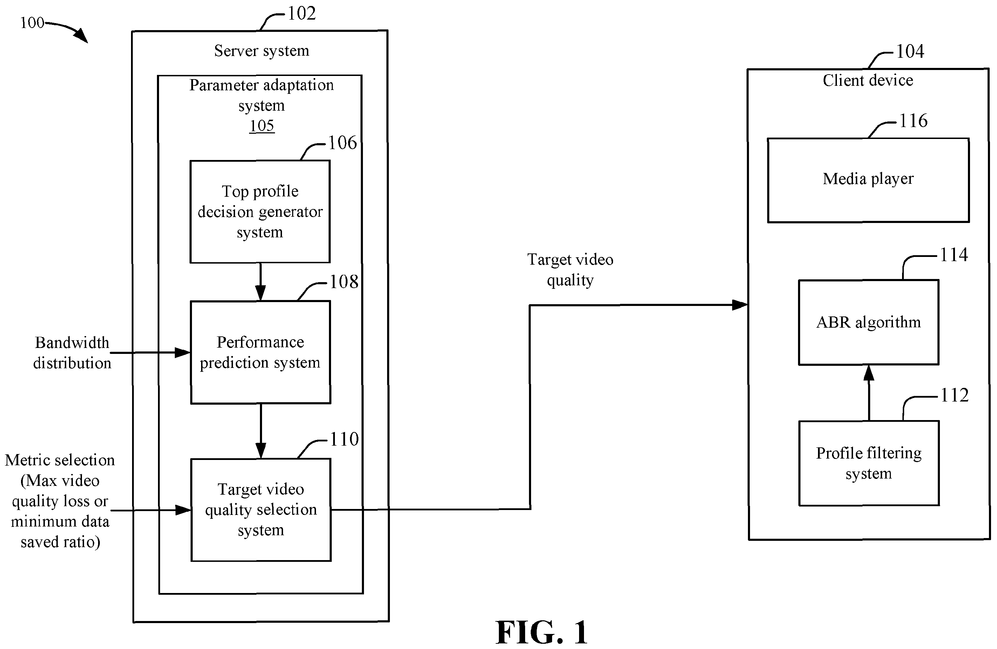

FIG. 1 depicts a simplified system 100 for performing profile filtering according to some embodiments. System 100 includes a server system 102 and a client device 104. Server system 102 may include one or more computing devices that may calculate a target video quality. The target video quality may be calculated based on receiving a request to play an instance of content, such as a request to play a video from a content delivery service. The content may have been encoded in multiple profiles in a profile ladder that are available for download in adaptive bitrate streaming. Client device 104 receives the target video quality and uses to target video quality to remove profiles from the profile ladder. Although one client device 104 is shown, multiple client devices 104 may be used and can receive a target video quality. In some embodiments, server system 102 may dynamically determine the target video quality for different client devices 104. That is, a first client device may receive a first target video quality and a second client device may receive a second target video quality for the same video. Different videos may also have different target video qualities for the same client device.

Client device 104 includes a profile filtering system 112, an adaptive bitrate (ABR) algorithm 114, and a media player 116. Profile filtering system 112 receives a target video quality from server system 102. The generation of the target video quality will be described in more detail below. Then, profile filtering system 112 determines a highest profile that ABR algorithm 114 can select. The highest profile may be referred to as the top profile. As discussed above, a profile ladder includes profiles that can be used for requesting different versions of the content. The profiles are associated with one or more characteristics, such as a bitrate characteristic, a quality characteristic, or a bitrate and quality characteristic. The bitrate may be the number of bits per second that is associated with a segment, such as the bitrate at which the segment was encoded. The quality characteristic may indicate the quality of a video (e.g., a resolution or other quality metric). A resolution of the video may be based on a number of pixels in a frame, and a higher resolution is associated with a higher quality. A higher bitrate may be associated with a higher quality also. The profiles may be organized in levels in the profile ladder, such as levels 0-10. The level of a profile in the profile ladder may be determined based on how the video is transcoded for that level. For example, a level 0 profile may be encoded at 200kbps, a level 1 profile may be encoded at 400kbps, and so on. A resolution of 640x360 (360p) pixels may be associated with the level 0 profile and a resolution of 1280x720 (720p) pixels may also be associated with the level 1 profile. The resolution may represent a number of pixels horizontally and vertically. In general, a lower level profile in the profile ladder may be considered a lower quality profile compared to a higher level profile.

Profile filtering system 112 uses the target video quality to select a top profile for each segment of the content. For example, content may be divided into portions referred to as segments. A restriction is stored for adaptive bitrate algorithm 114 such that it cannot select profiles that are associated with bitrates that are above the top profile (e.g., above a bitrate of the top profile).

During playback, adaptive bit rate algorithm 114 may analyze the available bandwidth during the delivery of the segments of the content. Adaptive bitrate algorithm 114 may select one of the available profiles (available does not include any removed profiles), and request a segment at the selected profile. Media player 116 may display the content for the segment upon receiving the content.

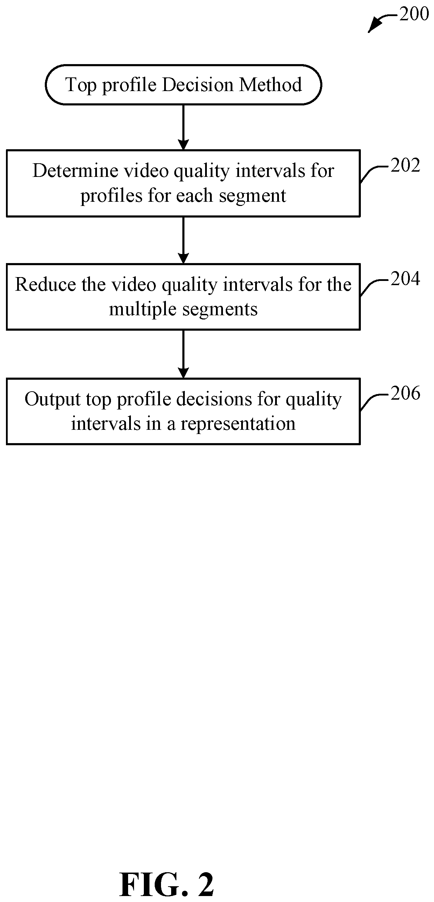

On server system 102, a parameter adaptation system 105 may generate the target video quality value. Although a target video quality is discussed, if content other than a video is used, the target quality may be based on that type of content, such as a target audio quality. A top profile decision generator system 106 may generate the feasible top profile decisions. A top profile decision may be a combination of top profiles for segments based on respective video quality of the profiles. This process will be described in more detail in FIG. 2.

A performance prediction system 108 may predict the performance, such as in the terms of a metric of a video quality loss and a metric of a data saved ratio of each top profile decision. Performance prediction system 108 receives a bandwidth distribution that is used to predict the performance. The bandwidth distribution may be a probability distribution of download bandwidth that may be experienced during the delivery of the instance of content. The probability distribution may be used to determine the probability of a download bandwidth being used for segments of the content. In some embodiments, the bandwidth distribution may be computed based on historical bandwidth information collected from the delivery of content. In some embodiments, the historical bandwidth distribution may be based on the specific client device 104 that requested the instance of content. Also, the historical bandwidth information may be from other client devices. The use of historical information for the specific client device 104 may personalize the generation of the target video quality to the conditions being experienced by the specific client device 104. Other historical bandwidth information from other client devices may be used to add context from other conditions being experienced.

A target video quality selection system 110 may receive all the feasible top profile decisions and the performances predicted for the top profile decisions. Target video quality selection system 110 receives a metric selection and outputs a target video quality. The metric selection may be from different metrics that may be used to select the top profiles for segments. In some embodiments, a maximum video quality loss or a minimum data saved ratio may be selected. A combination of the two metrics may be used also, or other metrics may be used. The maximum video quality loss may be an absolute delta between two video quality values. Video quality values may be evaluated by a metric, such as video multi-method assessment fusion (VMAF) peak signal to noise ratio (PSNR) or other metrics. A maximum video quality loss of a value, such as two, means that by limiting the top profile that can be selected, the average video quality perceived by the user by the metric is expected to be at most lowered by two units as measured by VMAF. The minimum data saved ratio may be a percentage threshold of data saved. For example, a minimum data saved ratio of 5% means that by limiting the top profile that can be selected, client device 104 is expected to save at least 5% of the downloaded data for the content by not having the profiles with higher bitrates above the top profile available. Although a ratio is discussed, the metric may not be ratio, such as it could be based on an amount of data saved. In general, the data saved metric is based on data saved.

Using the metric that is selected, target video quality selection system 110 evaluates the top profile decisions to determine the optimal top profile decision. Then, target video quality selection system 110 selects the appropriate target video quality to achieve this top profile decision.

In a simplified example, there may be four segments with three profiles that are associated with three bitrates for an instance of content. The feasible top profile decisions may include:

1. [0, 0, 0, 0] when the target quality falls between -∞ and 20. The positions in the array indicate the top profile for a respective segment where each position is associated with a segment. There are four segments of 1, 2, 3, and 4 here. This decision means that the maximum selectable profile (e.g., top profile) for all the four segments are profile 0 (the lowest one).

2. [0, 1, 2, 0] when the target quality falls between 20 and 40. In this decision, the top profile of the first segment is profile 0 (the lowest profile), the second segment is profile 1 (the medium profile), third segment is profile 2 (the highest profile), and the fourth segment is profile 0.

3. [1, 2, 2, 0] when the target quality falls between 40 and 80.

4. [2, 2, 2, 2] when the target quality fall between 80 and ∞.

In the above, [w,x,y,z] indicates the top profile decision where w is the top profile for the first segment, x is the top profile for the second segment, y is the top profile for the third segment, and z is the top profile for the fourth segment. The value of w,x,y,z may be the profile level, wherein a higher number is a profile associated with a higher bitrate or quality. More segments can be added as values in the array.

The following may be input to parameter adaptation system 105. In this example, the minimum data saved ratio is selected as the target metric and the value is 5% data saved. The bandwidth distribution may be 100 kilobits per second (kbps): 10%; 2000 kbps: 20%; 5,000 kbps: 80%. Here, 100 kbps: 10% means that the probability of download bandwidth being 100 kbps is 10%. According to the bandwidth distribution, the predicted performance of each feasible top profile decision may be found in Table I:

Table I

| Top profile decision | Associated target quality interval | Predicted video quality loss | Predicted data saved ratio |
|---|---|---|---|
| [0, 0, 0, 0] | (-∞, 20] | 5 | 10% |
| [0, 1, 2, 0] | (20, 40] | 3 | 8% |
| [1, 2, 2, 0] | (40, 80] | 2 | 5% |
| [2, 2, 2, 2] | (80, ∞) | 0 | 0% |

The associated target quality interval is the interval of quality associated with the profiles that are selected in the top profile decision. A parenthesis may indicate the endpoint is excluded and a bracket may indicate the endpoint is included. For example, (20,40] indicates 20 is not included and 40 is included. The predicted video quality loss is 5, 3, 2, and 0 units for the respective top profile decisions based on the metric used (e.g., VMAF). The predicted data saved ratio is 10%, 8%, 5%, and 0% for the respective top profile decisions. Target video quality selection system 110 may select a top profile decision among the available top profile decisions based on evaluating the metric that was received. In this example, the third top profile decision of [1, 2, 2, 0] is selected because it meets the predicted data saved ratio of 5%, but also minimizes the video quality loss with the value of "2". In contrast, the top profile decision for [0, 0, 0, 0] may provide a 10% predicted data saved ratio, but a predicted video quality loss of the value of "5", and the top profile decision for [0, 1, 2, 0] includes a predicted data saved ratio of 8%, but a predicted video quality loss of "3". For these top profile decisions, the predicted video quality losses are greater than predicted quality loss of 2 for the third top profile decision. Here, target video quality selection system 110 determines that the third top profile decision meets the data saved ratio target, but also minimizes the predicted video quality loss, and the selection of this top profile decision is considered optimal. The top profile decision is used to select a target video quality, such as a target video quality within a range of 40 to 80, which is sent to client device 104.

At client device 104, to ensure that the quality of the segments is stable, the top profiles are selected to be around a given target video quality instead of using a random selection. The following describes an example of selecting a top profile based on a target video quality. A video has N segments and is encoded into N profiles, and a variable $q_{ij}$ is the video quality of segment i with profile j. The video quality can be measured by any quantitative video quality metric, e.g. VMAF, PSNR, etc. VMAF is used as an example. The higher value for $q_{ij}$, the higher quality segment i has when profile j is selected to be played.

The top profile decision process requires a target video quality as input. This may be denoted as $Q_t$. For each segment i, when the video quality on profile j is the closest to the target quality, compared with qualities of other profiles, profile j is selected to be the top profile, such as using the following:

$$|q_{ij} - Q_t| \le |q_{ij'} - Q_t|, j' = 0,1,\ldots,m-1.$$

Adaptive bitrate algorithm 114 is restricted or not allowed to select a profile higher than the top profile when a segment i is requested for playback. Suppose a video has three segments and is encoded into four profiles that are associated with four bitrates, and the video quality of each segment for each profile is as follows:

Table II

|  | Segment 0 | Segment 1 | Segment 2 |
|---|---|---|---|
| Profile 3 | 90 | 95 | 88 |
| Profile 2 | 85 | 90 | 80 |
| Profile 1 | 74 | 80 | 70 |
| Profile 0 | 60 | 78 | 55 |

If the target video quality is 80, the top profiles for the three segments are profile 2, profile 1, and profile 2 for segment 0, segment 1, and segment 2, respectively. These segments have the video quality closest to 80. For example, profile 2 has a video quality of 85 for segment 0, profile 1 has a video quality of 80 for segment 1, and profile 2 has a video quality of 80 for segment 2. These video qualities may be closest to the video quality of 80 compared to the video qualities of other profiles.

The following will now describe the target video quality selection process in more detail.

Top Profile Decision

FIG. 2 depicts a simplified flowchart 200 of a method for determining the top profile decisions according to some embodiments. The target metric value may be set up with any value, but the number of feasible top profile decisions may be finite. Each feasible top profile decision may be a combination of profiles for segments and associated with a video quality interval. When the target video quality falls into this video quality interval, the profiles in the associated top profile decision will be selected as top profiles for segments by the client 104. Top profile decision generator system 106 may generate all the top profile decisions for a single segment and determine the associated video quality intervals for the top profile decisions. Then, top profile decision generator system 106 may reduce the intervals for the single segments into a representation that includes the top profile decisions and their associated video quality intervals for multiple segments.

From that, top profile decision generator 106 may come up with all the feasible top bitrate decisions, and the target video quality selection system 110 will select an optimal top bitrate decision from them first before it finally decides the target video quality.

In the process, at 202, top profile decision generator system 106 determines video quality intervals for profiles of each segment. The top profile varies when the target quality falls into different intervals. Specifically, when the client 104 is deciding the top profile for each segment i, the following is given:

- given any target quality in the interval $\left(-\infty, \frac{1}{2}(q_{i0} + q_{i1})\right]$, the top profile will be profile 0 (e.g., the lowest profile).

- given any target quality in the interval $\left(\frac{1}{2}(q_{i(m-2)} + q_{i(m-1)}), \infty\right)$, the top profile will be profile m-1 (e.g., the highest profile).

- given any target quality in the interval $\left(\frac{1}{2}(q_{i(j-1)} + q_{ij}), \frac{1}{2}(q_{ij} + q_{i(j+1)})\right]$, the top profile will be profile j (j is neither 0 nor m-1).

In the above, $q_{ij}$ is the video quality of segment i with profile j. Generally, the intervals may be determined as a halfway point between the video qualities of successive profiles. Thus, the video quality is divided into m successive intervals and each interval associated with a profile. When the target video quality falls into an interval, the associated profile is selected as the top profile for this segment.

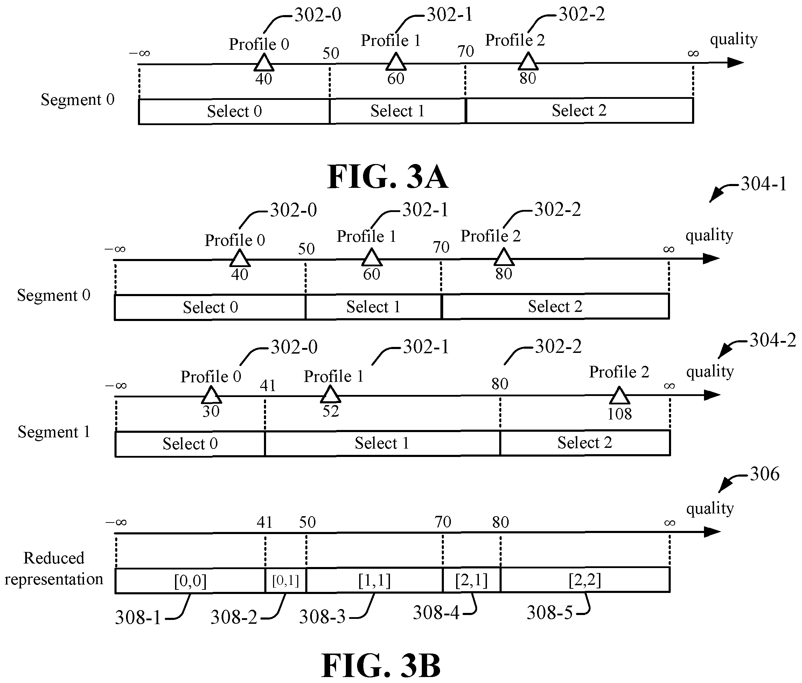

FIG. 3A depicts an example of the video quality intervals according to some embodiments. In FIG. 3A, m successive intervals may be divided by m-1 boundaries. For example, if there are three intervals, there are two boundaries. If $T_i$ refers to the interval partition for segment i, it can be denoted by the boundaries, e.g., $T_i = [t_{i0}, t_{i1}, ..., t_{i(m-2)}]$, where

$t_{ij} = \frac{1}{2}(q_{ij} + q_{i(j+1)})$. Specifically, when there is only one profile (e.g., m = 1), $T_i = []$, indicating only one interval (-oo, ∞),

If there are three profiles for a segment, the intervals associated with profiles that can be selected as the top profile may be calculated for segment 0 in this example. The video qualities for profile 0, profile 1, profile 2 may be listed as 40, 60, and 80 at 302-0, 302-1, and 302-2. The interval partition may be denoted as T=[50, 70] for the three profiles. The target quality should fall into the interval (-∞, 50] if profile 0 is selected as the top profile, interval (50, 70] for the profile 1, and interval (70, ∞) for the profile 2. The boundaries may be determined by a median between the quality values. For example, the interval of 50 is determined as the value between quality values of 40 and 60, and the value of 70 is determined as the value between quality value of 60 and 80. The use of -∞ and ∞ indicate a lowest possible video quality and a highest possible video quality.

Referring back to FIG. 2, at 204, top profile decision generator system 106 reduces the video quality intervals for multiple segments. When there are multiple segments, the involved partitions of those segments are reduced into a representation. FIG. 3B depicts an example of a representation 306 of the reduction according to some embodiments. There are only two segments of segment 0 at 304-1 and segment 1 at 304-2, but the reduction may be performed for more than two segments. In some embodiments, all segments of the video may be reduced into one representation, but in other embodiments, a portion of the segments may be reduced, such as 20 segments at a time, into respective representations.

At 306, a reduced representation of the video quality intervals is shown. For each interval, the top profile decision for these segments is shown. For example, the intervals may be $T_0 = [50, 70]$ for segment 0 and is $T_1 = [41, 80]$ for segment 1. As seen in the reduced representation, the intervals are based on quality interval values for both segments. Then, the top profile decisions for all the intervals that have been reduced are shown. At 308-1, the top profile decision may be [0, 0]. Each position of the array may represent the selected top profile for the respective segment. For position 0, the selected top profile for segment 0 is shown; and for position 1, the top profile for segment 1 is shown. Here, the first value of 0 means that profile 0 is selected as the top profile for segment 0, and the second value of 0 means that profile 0 is selected for segment 1. If there was a third segment that has been reduced, then a third value would represent the selected top profile for segment 2, such as [0,0,0]. By reducing the intervals, all the feasible top bitrate decisions are found. If there are m profiles and n segments, although there are $m^n$ possible combinations of profiles as the top profile decisions, only part of them is feasible on client 104. For example, the top profile decision [1, 0] is not shown, because it requires a target quality over 50 to select profile 1 as the top profile for segment 0, which contradicts the requirement of a target quality below 41 to select profile 0 for segment 1, considering the target quality should be the same when the client is requesting the segments of one video.

At 308-2, the top profile decision for the interval (41, 50) is shown as [0, 1]. Here, a selected top profile of profile 0 is shown for segment 0 and a selected top profile of profile 1 is shown for segment 1. Segment 0 selects profile 0 as the top profile and segment 1 selects profile 1 when the target quality falls within this interval. At 308-3, the top profile decision is [1, 1]. Here, segment 0 selects profile 1 and segment 1 selects profile 1. At 308-4, the top profile decision is [2, 1], and at 308-5, the top profile decision is [2, 2]. These top profile decisions are determined similarly as desired.

The following describes an embodiment that may be used to determine the top profile decisions. When there are multiple segments, the interval partitions of those segments can be reduced. Let $D_L$ refer to the decision list of all the top profile decisions for the first L segments. $d_{Lk} = [b_0, b_1, ..., b_{L-1}] \in D_L$ is an L-element vector that refers to the k-th top profile decision, where $b_i$ is the top profile for segment i. Let $S_L$ be the boundary list indicating the reduced intervals for the first L segments. When there are K elements in the list $D_L$, there will be K-1 boundaries in $S_L$ indicating K intervals associated with the elements. If $S_L = [t_0, ..., t_{K-2}]$, the interval associated with decision $d_{Lk}$ is $(t_{k-1}, t_k]$. Specifically, the interval is $(-\infty, t_0]$ when k=0 and $(t_{K-2}, \infty)$ when k=K-1. If K=1, $S_L=[]$, indicating only one interval $(-\infty, \infty)$. With all the denotations decided, the reduction method into a reduced representation may be as follows:

When $L = 1$, there are only m feasible top profile decisions, e.g., $d_{1j} = [j]$, and the video quality intervals are exactly the interval partition for segment 0, e.g., $S_1 = T_0$.

Given the decision list $D_{L-1}$ and the interval partition $S_{L-1}$ for the first L-1 segments, and the interval partition for segment L-1 (the L-th segment) $T_{L-1}$, top profile decision generator system 106 can compute the decision list $D_L$ and the interval partition $S_L$ for the first L segments using this process:

    1. Let there be K intervals in $S_{L-1}$ and H intervals in $T_{L-1}$. There are thus K-1 and H-1 interval boundaries, respectively.

    2. Merge all these K+H-2 interval boundaries and sort them in ascending order to get the interval partition for the first L segments $S_L = [t_0, ..., t_{K+H-3}]$.

    3. When $x = 0$, the top profile decision associated with the x-th interval $(-\infty, t_0]$ is $d_{Lx} = d_{(L-1)0} + [0]$.

    4. When $0 < x < K + H - 2$, let there be i boundaries from $S_{L-1}$ and j boundaries from $T_{L-1}$ in the first x boundaries *of* $S_L$ (e.g., $\{t_0, ..., t_{x-1}\}$ ). For the boundary $t_x$ and the x-th interval $(t_{x-1}, t_x]$, its associated top profile decision $d_{Lx}$ is $d_{(L-1)i} + [j]$, which is a vector of L elements computed by the (L-1)-element vector $d_{(L-1)i}$ appending a new element j.

    5. When $x = K + H - 2$, the associated top profile decision $d_{Lx}$ for the x-th interval $(t_{K+H-3}, \infty)$ is $d_{(L-1)(K-1)} + [m - 1]$.

Referring back to FIG. 2, at 206, top profile decision generator system 106 outputs the top profile decisions for quality intervals in a representation. The top profile decisions may be output to performance prediction system 108. Then, after determining the top profile decisions, performance prediction is performed.

Performance Prediction

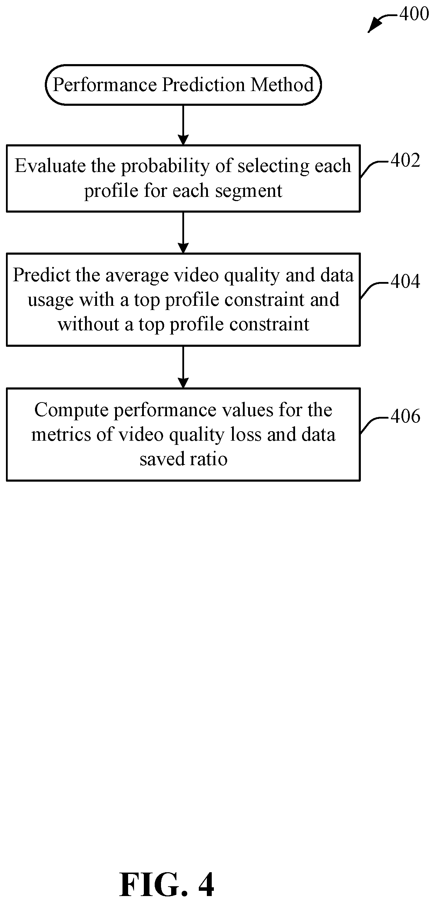

FIG. 4 depicts a simplified flowchart 400 of a method for predicting the performance of top profile decisions according to some embodiments. The performance prediction may include the following steps of evaluating the probability of selecting each profile for each segment, predicting the average video quality and data usage with or without the top profile constraint, and computing the metrics, such as the video quality loss and data saved ratio.

At 402, performance prediction system 108 evaluates the probability of selecting each profile for each segment. Performance prediction system 108 receives the bandwidth distribution to evaluate the probability of selecting each profile for each segment. The bandwidth distribution may be determined based on historical bandwidth information that is collected from client device 104. As discussed above, the historical bandwidth information may be the available bandwidth that is experienced while downloading content. The historical information may be based on solely bandwidth information from a specific client 104 that requested the instance of content. Also, historical bandwidth information may be used based on other client devices.

In some examples, the bandwidth distribution may be as follows in Table III:

Table III

| Bandwidth | 200kbps | 1200kpbs | 2000kbps |
|-----------|---------|----------|----------|
| Probability | 30% | 60% | 10% |

In Table III, the bandwidths may be 200kbps, 1200kbps, and 2000kbps, and the probability of experiencing the respective bandwidth may be 30%, 60%, and 10%, respectively. This means that there may be a 30% chance that the bandwidth experienced at client device 104 is 200kbps, a 60% chance that the bandwidth experienced is 1200kbps, and a 10% chance that the bandwidth experienced is 2000kbps. Accordingly, the most likely bandwidth experienced may be 1200kbps and the least likely bandwidth is 2000kbps.

If the instance of content is encoded into three different versions with three different profiles, the following may be the actual profiles and probability of selecting the profiles for a segment i:

Table III

| Profile | Profile 0 | Profile 1 | Profile 2 |
|---------|-----------|-----------|-----------|
| j | 0 | 1 | 2 |
| b | 400kbp | 1000kbps | 4500kbps |
| $p_{ij}$ | 30% | 70% | 0% |

In Table III, $P = \{p_{ij}\}$, where $p_{ij}$ refers to the probability of selecting profile j for segment i, and $b_{ij}$ is the bitrate of the profile. Here, the three version qualities may be 360p, 720p, and 1080p for profiles 0, 1, and 2, respectively. The probability of selecting the profile 0 is 30%, the probability of selecting the profile 1 is 70%, and the probability of selecting the profile 2 is 0%. The probability of selecting the profile 1 with an associated bitrate of 1000 kbps depends on the probability of bandwidth falling in [1000kbps, 4500kbps). It may be 70% because it is expected that the available bandwidth may be at 1200 kbps with 60% expectancy and 2000 kbps with a 10% expectancy. The probability of selecting the profile 2 is 0% because it depends on the probability of bandwidth being >= 4500kbps, which is impossible with the given bandwidth distribution.

In some embodiments, the following process may be used. To evaluate the probability of selecting each profile for each segment, performance prediction system 108 receives the bandwidth distribution, which can be implemented by sending the download information to the server system 102 and calculating the bandwidth distribution on the server system 102. Let $f(r)$ be the probability density function of the download bandwidth, and thus $\int_a^b f(r)dr$ is the probability of bandwidth falling between a and b. Let $P = \{p_{ij}\}$, where $p_{ij}$ refers to the probability of selecting profile j for segment i, and a restriction is $\sum_j p_{ij} = 1$.

Assuming that a profile will be selected when the download bandwidth is above an associated bitrate for the profile, but below the bitrate of the next higher profile, the probability of selecting bitrate j for segment i is:

$$p_{ij} = \int_{LB_{ij}}^{UP_{ij}} f(r)dr,$$

where $LB_{ij}$ is the lower bound for the integral and $UP_{ij}$ is the upper bound. From this:

$$LB_{ij} = \begin{cases} b_{i,j}, j > 0 \\ -\infty, j = 0 \end{cases},$$

and

$$UP_{ij} = \begin{cases} \infty, M \geq 1 \text{ and } j = M - 1 \\ b_{i,j+1}, j < M - 1 \end{cases}.$$

Here, j refers to the profile index when sorting all the profiles in ascending order, and $b_{i,j}$ refers to the bitrate value of the j-th profile.

At 404, performance prediction system 108 predicts the average video quality and data usage with a top profile constraint and without a top profile constraint. Using the top profile constraint may constrain the selection of profiles that are available and without the top profile constraint may not constrain any selection of profiles. Performance prediction system 108 may determine the predicted video quality without the constraint and the data usage without the constraint. Also, performance prediction system 108 may determine the predicted video quality with the constraint and the predicted data usage with the constraint. The performance using the two metrics may be determined even though one metric may be designated as the target. This is because the top profile decision may use both metrics when determining the top profile based on the target.

The following example for a segment may be used.

Table IV

| Profile | Profile 0 | Profile 1 | Profile 2 |
|---------|-----------|-----------|-----------|
| j | 0 | 1 | 2 |

(continued)

| Profile | Profile 0 | Profile 1 | Profile 2 |
|---|---|---|---|
| $q_{ij}$ | 60 | 85 | 90 |
| $s_{ij}$ | 2.44MB | 6.25MB | 25.75MB |
| Estimated selection probability $p_{ij}$ | 30% | 40% | 30% |

In this example, the following may be assumed:

- the video has n segments and is encoded into m profiles.

- $d = [b_0,...,b_n]$ is a top profile decision for an n-segment video, and $b_i$ is the profile index of the top profile for segment i. For example, $b_3 = 0$ means that the top profile for segment 3 is the lowest. In other words, the media player is not allowed to select a profile higher than the lowest profile.

- $P = \{p_{ij}\}$ is the estimated probability of selecting profile j for segment i.

- $q_{ij}$ is the video quality of segment i with profile j. As mentioned above, this can be measured by any quantitative video quality metric such as VMAF.

- $s_{ij}$ is the size of segment i with profile j (in bytes).

The estimated selection probability may be 30% for the profile 0, 40% for profile 1, and 30% for profile 2. If there is no top profile constraint, e.g., the media player 116 could select any of the 3 profiles, then:

- the expected video quality for this segment is 30% × 60 + 40% × 85 + 30% × 90 = 79.

- the expected data usage for this segment is 30% × 2.44 + 40% × 6.25 + 30% × 25.75 = 10.957MB.

When the top profile for this segment is profile 1, then:

- the expected video quality for this segment is 30% × 60 + 70% × 85 = 77.5.

- the expected data usage for this segment is 30% × 2.44 + 70% × 6.25 = 5.107MB.

In some embodiments, the video quality and the data usage for a single segment can be calculated as follows. For segment i,

- the predicted video quality without the constraint $\bar{Q}_i(P) = \sum_{j=0}^{m-1} p_{ij}q_{ij}$.

- the predicted data usage without the constraint $\bar{U}_i(P) = \sum_{j=0}^{m-1} p_{ij}s_{ij}$.

- the predicted video quality with the constraint $Q_i(P,d) = \sum_{j=0}^{b_i} p_{ij}q_{ij} + \sum_{j=b_i+1}^{m-1} p_{ij}q_{ib_i}$.

- the predicted data usage with the constraint $U_i(P,d) = \sum_{j=0}^{b_i} p_{ij}s_{ij} + \sum_{j=b_i+1}^{m-1} p_{ij}s_{ib_i}$.

When there are multiple segments, the metric average video quality is the mean of the video qualities of all the segments, and the metric data usage is the sum of the data usage of all the segments, such as:

- the predicted average video quality without the constraint $\bar{Q}(P) = \frac{1}{n}\sum_{i=0}^{n-1} \bar{Q}_i(P)$.

- the predicted data usage without the constraint $\bar{U}(P) = \sum_{i=0}^{n-1} \bar{U}_i(P)$.

- the predicted average video quality with the constraint $Q(P, d) = \frac{1}{n} \sum_{i=0}^{n-1} Q_i(P, d)$ .

- the predicted data usage with the constraint $U(P, d) = \sum_{i=0}^{n-1} U_i(P, d)$ .

For example, if there are 2 identical segments from the previous example in a video, performance prediction system 108 calculates $\overline{Q}(P)$ = 79, $\overline{U}(P)$ = 21.914MB, $Q(P, d)$ = 77.5 and $U(P, d)$ = 10.214MB.

Once computing the average video quality and data usage with and without constraints, at 406, performance prediction system 108 computes performance values for the metrics of video quality loss and data saved ratio. In some embodiments, two metrics may be used to evaluate the performance of a top profile decision of video quality loss and data saved ratio:

- video quality loss (VQL): the delta between the predicted average video quality with the constraint $Q$ and the predicted average video quality without the constraint $\overline{Q}$, e.g., $VQL = \overline{Q} - Q$

- data saved ratio (DSR): the relative delta between the predicted data usage with the constraint $U$ and the predicted data usage without the constraint $\overline{U}$, e.g., $DSR = \frac{\overline{U} - U}{\overline{U}} \times 100\%$ .

Given the input (a top profile decision $d = [b_0,...,b_n]$, and the bandwidth distribution $f(r)$), performance prediction system 108 outputs the predicted video quality loss and data saved ratio. Target video quality selection system 110 then computes the target video quality according to some embodiments.

Target Video Quality Selection

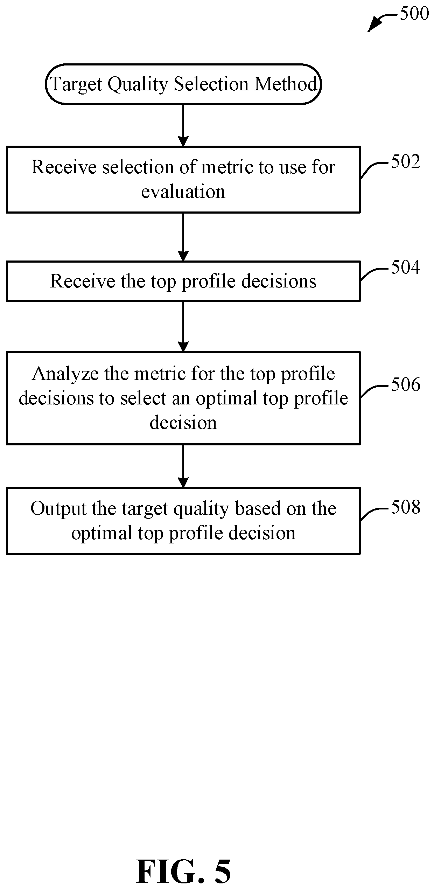

FIG. 5 depicts a simplified flowchart 500 by method for selecting the target video quality according to some embodiments. In this process, all the feasible top profile decisions may be evaluated and target video quality selection system 110 determines the optimal top profile decision and selects the appropriate target video quality to achieve this decision.

At 502, target video quality selection system 110 receives a selection of a target metric to use for evaluation. For example, the target metric may be the maximum video quality loss or a minimum data saved ratio. A value may be received for the target metric, such as the maximum video quality loss is set to 10. It can be either the lower bound of the data saving ratio $DSR_t$ or the upper bound of the video quality loss $VQL_t$, where t is target.

At 504, target video quality selection system 110 receives the top profile decisions. The top profile decisions may have been generated by top profile decision generator system 106.

At 506, target video quality selection system 110 analyzes the target metric for the top profile decisions to select an optimal top profile decision. In some examples, the maximum video quality loss may be selected as the metric and set to a value of 10. If there are five feasible top profile decisions labeled A, B, C, D, and E, the following lists their predicted performances in Table V:

Table V

| Top profile decision | Predicted video quality loss | Predicted data saving ratio |
|---|---|---|
| A | 4 | 8% |
| B | 4 | 10% |
| C | 12 | 20% |
| D | 12 | 22% |
| E | 15 | 30% |

The predicted video quality loss and the predicted data saved ratio is included for each top profile decision as calculated by target video quality selection system 110. The following cases may be provided.

- Case 1: both top profile decisions A and B meet the target metric (because they have video quality loss no more than the maximum video quality loss of 10). Since top profile decision B has a higher data saving ratio, top profile decision B is better than top profile decision A.

- Case 2: Neither top profile decisions C and D meet the target metric (because they have video quality loss more than 10). Since their distances to the target are the same (|10-12|=2 for both top profile decisions C and D), and top profile decision D has higher data saving ratio, top profile decision D is better than top profile decision C.

- Case 3: Neither top profile decisions D and E meet the target metric, but top profile decision E has longer distance (=5) to the target than top profile decision E (=2), so top profile decision D is better than top profile decision E.

- Case 4: since top profile decisions A and B meet the target and top profile decisions C, D, E do not, any of top profile decisions {A, B} is better than top profile decisions {C, D , E}.

Here, the optimal top profile decision will be top profile decision B because the predicted video quality loss meets the target of 10, and this top profile decision includes a higher data saved ratio of 10% than top profile decision A.

In summary, the following may be used, let $D$ be the set of all the feasible top profile decisions. For every top profile decision $d_k \in D$, target video quality selection system 110 first calculates its metrics of video quality loss $VQL_k$ and data saving ratio $DSR_k$ for this top profile decision. Then target video quality selection system 110 compares the metrics for the current top profile decision $d_k$, where k is a profile decision index, and the ones for the best top profile decision so far, and may update the best top profile decision.

In the following, let top profile decision $d^*$ refer to the best decision, and video quality loss $VQL^*$ and data saved ratio $DSR^*$ refer to its performance. Suppose the specified target metric is the maximum video quality loss that can be tolerated, e.g., $VQL_t$.

- If both top profile decisions $d_k$ and $d^*$ meet the target metric (e.g., $VQL_k \leq VQL_t$ and $VQL^* \leq VQL_t$), top profile decision $d_k$ becomes the best decision only when $DSR_k > DSR^*$.
- If neither top profile decision $d_k$ nor top profile decision $d^*$ meets the target metric (e.g., $VQL_k > VQL_t$ and $VQL^* > VQL_t$),

    o if both of them are equally close to the target metric (e.g., $|VQL_k - VQL_t| = |VQL^* - VQL_t|$), top profile decision $d_k$ becomes the best decision only when $DSR_k > DSR^*$.
    ○ Otherwise, top profile decision $d_k$ becomes the best decision only when it is closer to the target metric, e.g., $|VQL_k - VQL_t| < |VQL^* - VQL_t|$

- Otherwise, top profile decision $d_k$ becomes the best decision as long as it meets the target metric, e.g., $VQL_k \leq VQL_t$.

When the metric that is selected is the minimum data saved ratio, the following may be performed. Suppose that the minimum data saved ratio is set to 5%. If there are five feasible top profile decisions, and the following predicted performance is provided in Table VI:

Table VI

| Top bitrate decision | Predicted video quality loss | Predicted data saving ratio |
|---|---|---|
| A | 12 | 8% |
| B | 10 | 8% |
| C | 4 | 3% |
| D | 6 | 3% |
| E | 1 | 0% |

Here, the top profile decisions are again, A, B, C, D, and E. The respective predicted video quality loss and predicted data saved ratio from target video quality selection system 110 are shown. The following cases may be decided by target video quality selection system 110.

- Case 1: both top profile decisions A and B meet the target metric (by having data saving ratio >= minimum data saving ratio 5%). Since top profile decision B has lower video quality loss, top profile decision B is better than top profile decision A.

- Case 2: Neither top profile decisions C and D meet the target metric (by having data saved ratio less than 5%). Since their distances to the target are the same (|3%-5%|=2% for both top profile decisions C and D), and top profile decision C has lower video quality loss, top profile decision C is better than top profile decision D.

- Case 3: Neither top profile decisions D and E meet the target metric, but top profile decision E has longer distance (=5%) to the target than top profile decision E (=2%), so top profile decision D is better than top profile decision E.

- Case 4: since top profile decisions A and B meet the target and top profile decisions C, D, E do not, any of top profile decisions {A, B} is better than top profile decisions {C, D , E}.

Here, target video quality selection system 110 selects the optimal top profile decision as top profile decision B because both top profile decisions A and B meet the target metric (by having data saved ratio of 8%, but top profile decision B has lower video quality loss of 10 compared to 12.

In summary, when the specified QoS target is the minimum data saved ratio, e.g., $DSR_t$, the following may be used to determine the top profile decision:

- If both top profile decisions $d_k$ and $d^*$ meet the target metric (e.g., $DSR_k \geq DSR_t$ and $DSR^* \geq DSR_t$), top profile decision $d_k$ becomes the best decision only when $VQL_k < VQL^*$.

- If neither top profile decisions $d_k$ nor $d^*$ meets the target metric (e.g., $DSR_k < DSR_t$ and $DSR^* < DSR_t$),

    o if both of them are equally close to the target metric (e.g., $|DSR_k - DSR_t| = |DSR^* - DSR_t|$), top profile decision $d_k$ becomes the best decision only when $VQL_k < VQL^*$.
    ○ Otherwise, top profile decision $d_k$ becomes the best decision only when it is closer to the target, e.g., $|DSR_k - DSR_t| < |DSR^* - DSR_t|$.

- Otherwise, top profile decision $d_k$ becomes the best decision as long as it meets the top profile decision, e.g., $DSR_k \geq DSR_t$.

At 508, target video quality selection system 110 outputs the target quality based on the optimal top profile decision.

Target video quality selection system 110 determines the associated video quality interval for the optimal top profile decision. That is, after deciding the best top profile decision $d^*$, target video quality selection system 110 can find out its associated quality interval f, and the interval is ($a$, $b$). The chosen target quality could be any value in this interval. The following may be used, but is not limited to, if the interval is:

- if $a$ = -∞ and b is not ∞, the best target quality can be $b$.

- if a is not ∞ and $b$ = ∞, the best target quality can be $a$ + 1.

- if $a$ = -∞ and $b$ = ∞, the best target quality can be any value, e.g., 10.

- otherwise, the best target quality can be the median in the interval, e.g., $\frac{a+b}{2}$.

In the following example, the associated target video quality intervals of the top profile decisions from the previous example are as follows:

| Top profile decision | Target quality interval | Predicted video quality loss | Predicted data saving ratio |
|---|---|---|---|
| A | (-∞, 20] | 12 | 8% |
| B | (20, 40] | 10 | 8% |
| C | (40, 60] | 4 | 3% |
| D | (60, 80] | 6 | 3% |
| E | (80, ∞) | 1 | 0% |

If top profile decision A is the optimal choice, the target video quality can be set to any value in the range of (-∞, 20]. In some embodiments, the target video quality of 20 will be sent to the client side because this is the highest quality in the range, but other quality values may be sent from the range. If top profile decision E is the optimal choice, the target quality can be set to any value in (80, ∞). In some embodiments, the target video quality of 81 is sent because target video quality selection system 110 may not want to send too high of a quality value. In some embodiments, target video quality selection system 110 determines top profile decision B is the optimal choice, so the actual target quality can be set to any value in the range of (20, 40]. In some embodiments, target video quality selection system 110 uses the median of the range when one of the values is not infinity, such as the value of 30 (=(20+40)/2) will be sent.

After determining the target video quality, target video quality selection system 110 sends the target video quality to client device 104. Then, client device 104 may use the target video quality to perform adaptive bitrate streaming with the requested instance of content. As discussed above, client device 104 uses the target video quality to remove some profiles, if needed, from the profile ladder.

Conclusion

Parameter adaptation system 105 may provide a process to predict the performance of metrics for top profile decisions. The process offers flexibility in setting quality of service targets, such as the maximum quality loss or minimum data saved ratio may be set based on different preferences. The process may be adapted in real time to respond dynamically to changes in network conditions, content characteristics, and user preferences. This may improve the efficiency of the delivery of content. Also, the data saved ratio and maximum quality loss that are used can be understood in relatable terms, which may be practical and have physical meaning, which allows the tuning of the metrics to be understood. The resulting performance of downloading the video may then be evaluated.

System

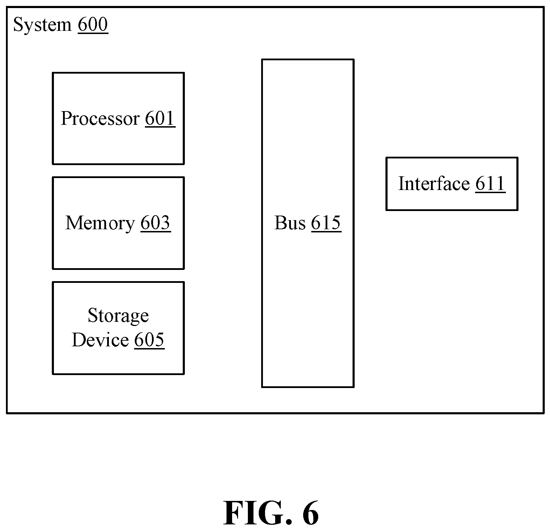

FIG. 6 illustrates one example of a computing device according to some embodiments. According to various embodiments, a system 600 suitable for implementing embodiments described herein includes a processor 601, a memory 603, a storage device 605, an interface 611, and a bus 615 (e.g., a PCI bus or other interconnection fabric.) System 600 may operate as a variety of devices such as server system 102, or any other device or service described herein. Although a particular configuration is described, a variety of alternative configurations are possible. The processor 601 may perform operations such as those described herein. Instructions for performing such operations may be embodied in the memory 603, on one or more non-transitory computer readable media, or on some other storage device. Various specially configured devices can also be used in place of or in addition to the processor 601. Memory 603 may be random access memory (RAM) or other dynamic storage devices. Storage device 605 may include a non-transitory computer-readable storage medium holding information, instructions, or some combination thereof, for example instructions that when executed by the processor 601, cause processor 601 to be configured or operable to perform one or more operations of a method as described herein. Bus 615 or other communication components may support communication of information within system 600. The interface 611 may be connected to bus 615 and be configured to send and receive data packets over a network. Examples of supported interfaces include, but are not limited to: Ethernet, fast Ethernet, Gigabit Ethernet, frame relay, cable, digital subscriber line (DSL), token ring, Asynchronous Transfer Mode (ATM), High-Speed Serial Interface (HSSI), and Fiber Distributed Data Interface (FDDI). These interfaces may include ports appropriate for communication with the appropriate media. They may also include an independent processor and/or volatile RAM. A computer system or computing device may include or communicate with a monitor, printer, or other suitable display for providing any of the results mentioned herein to a user.

Any of the disclosed implementations may be embodied in various types of hardware, software, firmware, computer readable media, and combinations thereof. For example, some techniques disclosed herein may be implemented, at least in part, by non-transitory computer-readable media that include program instructions, state information, etc., for configuring a computing system to perform various services and operations described herein. Examples of program instructions include both machine code, such as produced by a compiler, and higher-level code that may be executed via an interpreter. Instructions may be embodied in any suitable language such as, for example, Java, Python, C++, C, HTML, any other markup language, JavaScript, ActiveX, VBScript, or Perl. Examples of non-transitory computer-readable media include, but are not limited to: magnetic media such as hard disks and magnetic tape; optical media such as flash memory, compact disk (CD) or digital versatile disk (DVD); magnetooptical media; and other hardware devices such as read-only memory ("ROM") devices and random-access memory ("RAM") devices. A non-transitory computer-readable medium may be any combination of such storage devices.

In the foregoing specification, various techniques and mechanisms may have been described in singular form for clarity. However, it should be noted that some embodiments include multiple iterations of a technique or multiple instantiations of a mechanism unless otherwise noted. For example, a system uses a processor in a variety of contexts but can use multiple processors while remaining within the scope of the present disclosure unless otherwise noted. Similarly, various techniques and mechanisms may have been described as including a connection between two entities. However, a connection does not necessarily mean a direct, unimpeded connection, as a variety of other entities (e.g.,

bridges, controllers, gateways, etc.) may reside between the two entities.

Some embodiments may be implemented in a non-transitory computer-readable storage medium for use by or in connection with the instruction execution system, apparatus, system, or machine. The computer-readable storage medium contains instructions for controlling a computer system to perform a method described by some embodiments. The computer system may include one or more computing devices. The instructions, when executed by one or more computer processors, may be configured or operable to perform that which is described in some embodiments.

As used in the description herein and throughout the claims that follow, "a", "an", and "the" include plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of some embodiments may be implemented. The above examples and embodiments should not be deemed to be the only embodiments and are presented to illustrate the flexibility and advantages of some embodiments as defined by the following claims. Based on the above disclosure and the following claims, other arrangements, embodiments, implementations, and equivalents may be employed without departing from the scope hereof as defined by the claims.

This disclosure also refers to the following items.

Item 1. A method comprising:

determining an instance of content to be delivered to a client device, wherein the instance of content includes a plurality of segments that is associated with a plurality of profiles;
determining a target metric and a bandwidth distribution;
determining a plurality of top profile decisions for the plurality of segments, wherein a top profile decision lists a top profile that can be selected for respective segments in the plurality of segments;
determining a performance of the target metric for the plurality of top profile decisions based on the bandwidth distribution;
selecting a top profile decision from the plurality of top profile decisions based on the performance of the target metric for the plurality of top profile decisions; and
using the top profile decision to determine a target quality, wherein the target quality is used to select top profiles for requesting segments in the plurality of segments during playback of the instance of content.

Item 2. The method of item 1, wherein the target metric is selected from a first metric based on data saved and a second metric based on quality loss.

Item 3. The method of item 1, wherein the bandwidth distribution is based on a download bandwidth probability.

Item 4. The method of item 3, wherein the bandwidth distribution is based on information from the client device.

Item 5. The method of item 1, wherein determining the target metric comprises receiving a target value for the target metric.

Item 6. The method of item 5, wherein the target value for the target metric is adaptable per instance of content or client device.

Item 7. The method of item 1, wherein determining the plurality of top profile decisions comprises:

determining metric values of a quality metric for profiles in the plurality of profiles; and
determining an interval partition based on the metric values of the quality metric for a segment, wherein interval partition lists a set of metric values for the quality metric to form intervals that are associated with respective profiles.

Item 8. The method of item 7, wherein determining the plurality of top profile decisions comprises:

determining an interval partition for multiple segments in the plurality of segments; and
determining a representation that includes a single interval partition that represents the interval partitions of the multiple segments.

Item 9. The method of item 8, wherein:

the representation includes a plurality of intervals,
each interval lists a top profile for respective segments in the multiple segments, and
a top profile decision is determined for each interval.

Item 10. The method of item 1, wherein determining the performance of the target metric for the plurality of top profile decisions comprises:

evaluating a probability of selecting profiles in the plurality of profiles; and
predicting a first value for the target metric based on the performance of the metric using a constraint with the top profile from the top profile decision and a second value for the target metric without using the constraint, wherein the first value and the second value are used to determine a third value for the performance of the target metric that is used to select the top profile decision.

Item 11. The method of item 10, wherein determining the performance of the target metric for the plurality of top profile decisions comprises:

predicting the performance of a second metric using the constraint with the top profile from the top profile decision and without using the constraint; and
predicting a fourth value for the second metric based on the performance of the metric using the constraint with the top profile from the top profile decision and a fifth value for the second metric without using the constraint, wherein the fourth value and the fifth value are used to determine a sixth value for the performance of the second metric that is used to select the top profile decision.

Item 12. The method of item 11, wherein the target metric is used to select the top profile decision based on the second metric.

Item 13. The method of item 1, wherein selecting the top profile decision comprises:
comparing a target value for the target metric for respective target profile decisions the plurality of top profile decisions to select the top profile decision.

Item 14. The method of item 13, wherein the top profile decision includes a target value for the target metric that is closer to the target metric than another top profile decision in the plurality of top profile decisions.

Item 15. The method of item 13, wherein comparing the target value for the target metric comprises:
using a target value for a second metric to select the top profile decision.

Item 16. The method of item 1, wherein using the top profile decision to determine the target quality comprises:
selecting a target quality value based on an interval of quality values that is associated with the top profile decision.

Item 17. The method of item 1, wherein top profile decisions in the plurality of top profile decisions are associated with different intervals of quality values.

Item 18. A non-transitory computer-readable storage medium having stored thereon computer executable instructions, which when executed by a computing device, cause the computing device to be operable for:

determining an instance of content to be delivered to a client device, wherein the instance of content includes a plurality of segments that is associated with a plurality of profiles;
determining a target metric and a bandwidth distribution;
determining a plurality of top profile decisions for the plurality of segments, wherein a top profile decision lists a top profile that can be selected for respective segments in the plurality of segments;
determining a performance of the target metric for the plurality of top profile decisions based on the bandwidth distribution;
selecting a top profile decision from the plurality of top profile decisions based on the performance of the target metric for the plurality of top profile decisions; and
using the top profile decision to determine a target quality, wherein the target quality is used to select top profiles for requesting segments in the plurality of segments during playback of the instance of content.

Item 19. The non-transitory computer-readable storage medium of item 18, wherein determining the performance of the target metric for the plurality of top profile decisions comprises:

> evaluating a probability of selecting profiles in the plurality of profiles; and
> predicting a first value for the target metric based on the performance of the metric using a constraint with the top profile from the top profile decision and a second value for the target metric without using the constraint, wherein the first value and the second value are used to determine a third value for the performance of the target metric that is used to select the top profile decision.

Item 20. An apparatus comprising:

> one or more computer processors; and
> a computer-readable storage medium comprising instructions for controlling the one or more computer processors to be operable for:

>> determining an instance of content to be delivered to a client device, wherein the instance of content includes a plurality of segments that is associated with a plurality of profiles;
>> determining a target metric and a bandwidth distribution;
>> determining a plurality of top profile decisions for the plurality of segments, wherein a top profile decision lists a top profile that can be selected for respective segments in the plurality of segments;
>> determining a performance of the target metric for the plurality of top profile decisions based on the bandwidth distribution;
>> selecting a top profile decision from the plurality of top profile decisions based on the performance of the target metric for the plurality of top profile decisions; and
>> using the top profile decision to determine a target quality, wherein the target quality is used to select top profiles for requesting segments in the plurality of segments during playback of the instance of content.

**Claims**

1. A method comprising:

   > determining an instance of content to be delivered to a client device, wherein the instance of content includes a plurality of segments that is associated with a plurality of profiles;
   > determining a target metric and a bandwidth distribution;
   > determining a plurality of top profile decisions for the plurality of segments, wherein a top profile decision lists a top profile that can be selected for respective segments in the plurality of segments;
   > determining a performance of the target metric for the plurality of top profile decisions based on the bandwidth distribution;
   > selecting a top profile decision from the plurality of top profile decisions based on the performance of the target metric for the plurality of top profile decisions; and
   > using the top profile decision to determine a target quality, wherein the target quality is used to select top profiles for requesting segments in the plurality of segments during playback of the instance of content.

2. The method of claim 1, wherein the target metric is selected from a first metric based on data saved and a second metric based on quality loss.

3. The method of claim 1 or 2, wherein the bandwidth distribution is based on a download bandwidth probability.

4. The method of any one of claims 1 to 3, wherein the bandwidth distribution is based on information from the client device.

5. The method of any one of claims 1 to 4, wherein determining the target metric comprises:

   > receiving a target value for the target metric, and
   > wherein optionally the target value for the target metric is adaptable per instance of content or client device.

6. The method of any one of claims 1 to 5, wherein determining the plurality of top profile decisions comprises:

determining metric values of a quality metric for profiles in the plurality of profiles; and
determining an interval partition based on the metric values of the quality metric for a segment, wherein interval partition lists a set of metric values for the quality metric to form intervals that are associated with respective profiles.

7. The method of any one of claims 1 to 6, wherein determining the plurality of top profile decisions comprises:

determining an interval partition for multiple segments in the plurality of segments; and
determining a representation that includes a single interval partition that represents the interval partitions of the multiple segments, and
wherein optionally:

the representation includes a plurality of intervals,
each interval lists a top profile for respective segments in the multiple segments, and
a top profile decision is determined for each interval.

8. The method of any one of claims 1 to 7, wherein determining the performance of the target metric for the plurality of top profile decisions comprises:

evaluating a probability of selecting profiles in the plurality of profiles; and
predicting a first value for the target metric based on the performance of the metric using a constraint with the top profile from the top profile decision and a second value for the target metric without using the constraint, wherein the first value and the second value are used to determine a third value for the performance of the target metric that is used to select the top profile decision; and/or
wherein determining the performance of the target metric for the plurality of top profile decisions comprises:

predicting the performance of a second metric using the constraint with the top profile from the top profile decision and without using the constraint; and
predicting a fourth value for the second metric based on the performance of the metric using the constraint with the top profile from the top profile decision and a fifth value for the second metric without using the constraint, wherein the fourth value and the fifth value are used to determine a sixth value for the performance of the second metric that is used to select the top profile decision.

9. The method of any one of claims 1 to 8, wherein the target metric is used to select the top profile decision based on the second metric.

10. The method of any one of claims 1 to 9, wherein selecting the top profile decision comprises:

comparing a target value for the target metric for respective target profile decisions the plurality of top profile decisions to select the top profile decision, and
wherein optionally comparing the target value for the target metric comprises:
using a target value for a second metric to select the top profile decision.

11. The method of any one of claims 1 to 10, wherein the top profile decision includes a target value for the target metric that is closer to the target metric than another top profile decision in the plurality of top profile decisions.

12. The method of any one of claims 1 to 11, wherein using the top profile decision to determine the target quality comprises:

selecting a target quality value based on an interval of quality values that is associated with the top profile decision; and/or
wherein top profile decisions in the plurality of top profile decisions are associated with different intervals of quality values.

13. A non-transitory computer-readable storage medium having stored thereon computer executable instructions, which when executed by a computing device, cause the computing device to be operable for:

determining an instance of content to be delivered to a client device, wherein the instance of content includes a plurality of segments that is associated with a plurality of profiles;

determining a target metric and a bandwidth distribution;

determining a plurality of top profile decisions for the plurality of segments, wherein a top profile decision lists a top profile that can be selected for respective segments in the plurality of segments;

determining a performance of the target metric for the plurality of top profile decisions based on the bandwidth distribution;

selecting a top profile decision from the plurality of top profile decisions based on the performance of the target metric for the plurality of top profile decisions; and

using the top profile decision to determine a target quality, wherein the target quality is used to select top profiles for requesting segments in the plurality of segments during playback of the instance of content.

14. The non-transitory computer-readable storage medium of claim 13, wherein determining the performance of the target metric for the plurality of top profile decisions comprises:

evaluating a probability of selecting profiles in the plurality of profiles; and

predicting a first value for the target metric based on the performance of the metric using a constraint with the top profile from the top profile decision and a second value for the target metric without using the constraint, wherein the first value and the second value are used to determine a third value for the performance of the target metric that is used to select the top profile decision.

15. An apparatus comprising:

one or more computer processors; and

a computer-readable storage medium comprising instructions for controlling the one or more computer processors to be operable for:

determining an instance of content to be delivered to a client device, wherein the instance of content includes a plurality of segments that is associated with a plurality of profiles;

determining a target metric and a bandwidth distribution;

determining a plurality of top profile decisions for the plurality of segments, wherein a top profile decision lists a top profile that can be selected for respective segments in the plurality of segments;

determining a performance of the target metric for the plurality of top profile decisions based on the bandwidth distribution;

selecting a top profile decision from the plurality of top profile decisions based on the performance of the target metric for the plurality of top profile decisions; and

using the top profile decision to determine a target quality, wherein the target quality is used to select top profiles for requesting segments in the plurality of segments during playback of the instance of content.

**FIG. 1**

200

Top profile Decision Method

Determine video quality intervals for profiles for each segment ⟋202

Reduce the video quality intervals for the multiple segments ⟋204

Output top profile decisions for quality intervals in a representation ⟋206

# FIG. 2

FIG. 3A

FIG. 3B

400

Performance Prediction Method

Evaluate the probability of selecting each profile for each segment — 402

Predict the average video quality and data usage with a top profile constraint and without a top profile constraint — 404

Compute performance values for the metrics of video quality loss and data saved ratio — 406

# FIG. 4

500

Target Quality Selection Method

Receive selection of metric to use for evaluation — 502

Receive the top profile decisions — 504

Analyze the metric for the top profile decisions to select an optimal top profile decision — 506

Output the target quality based on the optimal top profile decision — 508

**FIG. 5**

System 600

Processor 601

Memory 603

Storage
Device 605

Bus 615

Interface 611

# FIG. 6

Europäisches
Patentamt

European
Patent Office

Office européen
des brevets

## EUROPEAN SEARCH REPORT

**Application Number**

EP 25 19 1432

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/305842 A1 (LIU CHEN [CN] ET AL) 12 September 2024 (2024-09-12) * abstract * * paragraph [0001] * * paragraph [0027] - paragraph [0030] * * paragraph [0032] * * paragraph [0035] - paragraph [0038] * * paragraph [0041] * * paragraph [0046] - paragraph [0048] * * paragraph [0051] - paragraph [0053] * * paragraph [0066] - paragraph [0068] * * paragraph [0075] * * paragraph [0078] - paragraph [0079] * * paragraph [0082] * * figures 1,3B,7,15 * | 1-15 | INV. H04N21/2343 H04L41/0896 H04L65/80 H04N21/2662 H04N21/845 H04N21/258 H04N21/462 |
| X | ----- US 2022/141513 A1 (DAI TONGYU [CN] ET AL) 5 May 2022 (2022-05-05) * abstract * * paragraph [0001] - paragraph [0002] * * paragraph [0017] - paragraph [0018] * * paragraph [0023] - paragraph [0035] * * paragraph [0039] * * paragraph [0042] - paragraph [0043] * * paragraph [0051] - paragraph [0052] * * figures 1,2,4 * ----- -/-- | 1-15 | TECHNICAL FIELDS SEARCHED (IPC) H04N H04L |

The present search report has been drawn up for all claims

| Place of search | Date of completion of the search | Examiner |
|---|---|---|
| The Hague | 29 September 2025 | Fantini, Federico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt
European
Patent Office
Office européen
des brevets

**EUROPEAN SEARCH REPORT**

Application Number

EP 25 19 1432

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FARZAD TASHTARIAN ÂEUR ABDELHAK BENTALEBÂ JUNCHEN JIANG$ HERMANN HELLWAGNERÂEUR ÂEUR CHRISTIAN DOPPLER LABORATORY ATHENA ET AL: "ARTEMIS: Adaptive Bitrate Ladder Optimization for Live Video Streaming", USENIX, USENIX, THE ADVANCED COMPUTING SYSTEMS ASSOCIATION , 16 April 2024 (2024-04-16), pages 1-22, XP061085600, Retrieved from the Internet: URL:http://www.usenix.org/system/files/nsd i24-tashtarian.pdf * abstract * * page 2, column 2 - page 3, column 2 * * page 5, column 1 * * page 6, column 2 - page 7, column 1 * * figures 1,7 * | 1-15 | |
| A | NGUYEN MINH ET AL: "WISH: User-centric Bitrate Adaptation for HTTP Adaptive Streaming on Mobile Devices", 2021 IEEE 23RD INTERNATIONAL WORKSHOP ON MULTIMEDIA SIGNAL PROCESSING (MMSP), IEEE, 6 October 2021 (2021-10-06), pages 1-6, XP034102882, DOI: 10.1109/MMSP53017.2021.9733605 [retrieved on 2022-03-11] * abstract * * page 1, column 1 - column 2 * * page 5, column 2 * * table 2 * | 1-15 | TECHNICAL FIELDS SEARCHED (IPC) |
| A | US 2013/179589 A1 (MCCARTHY SEAN T [US] ET AL) 11 July 2013 (2013-07-11) * abstract * * paragraph [0076] - paragraph [0077] * * figure 15 * | 1-15 | |

-/--

The present search report has been drawn up for all claims

| Place of search | Date of completion of the search | Examiner |
|---|---|---|
| The Hague | 29 September 2025 | Fantini, Federico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

Europäisches
Patentamt

European
Patent Office

Office européen
des brevets

## EUROPEAN SEARCH REPORT

**Application Number**

EP 25 19 1432

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AHMED TELILI ET AL: "Bitrate Ladder Prediction Methods for Adaptive Video Streaming: A Review and Benchmark", ARXIV.ORG, CORNELL UNIVERSITY LIBRARY, 201 OLIN LIBRARY CORNELL UNIVERSITY ITHACA, NY 14853, 30 October 2023 (2023-10-30), XP091648157, * abstract * * page 2, column 2 - page 4, column 1 * * figure 2 * ----- | 1-15 | |

**TECHNICAL FIELDS SEARCHED (IPC)**

The present search report has been drawn up for all claims

| Place of search | Date of completion of the search | Examiner |
|---|---|---|
| The Hague | 29 September 2025 | Fantini, Federico |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
    ........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 1432

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2025

| Patent document cited in search report | | Publication date | Patent family member(s) | | Publication date |
|---|---|---|---|---|---|
| US 2024305842 | A1 | 12-09-2024 | CN | 118632002 A | 10-09-2024 |
| | | | EP | 4429235 A1 | 11-09-2024 |
| | | | JP | 7686728 B2 | 02-06-2025 |
| | | | JP | 2024125994 A | 19-09-2024 |
| | | | JP | 2025128149 A | 02-09-2025 |
| | | | KR | 20240136212 A | 13-09-2024 |
| | | | US | 2024305842 A1 | 12-09-2024 |
| | | | US | 2025126309 A1 | 17-04-2025 |
| US 2022141513 | A1 | 05-05-2022 | CN | 114449353 A | 06-05-2022 |
| | | | EP | 3993365 A1 | 04-05-2022 |
| | | | JP | 7626399 B2 | 07-02-2025 |
| | | | JP | 2022074119 A | 17-05-2022 |
| | | | JP | 2023175841 A | 12-12-2023 |
| | | | KR | 20220059425 A | 10-05-2022 |
| | | | US | 2022141513 A1 | 05-05-2022 |
| US 2013179589 | A1 | 11-07-2013 | US | 2013179589 A1 | 11-07-2013 |
| | | | WO | 2013043919 A1 | 28-03-2013 |

EPO FORM P0459

For more details about this annex : see Official Journal of the European Patent Office, No. 12/82